# EUROPEAN PATENT APPLICATION

(11) **EP 4 249 232 A1**
(43) Date of publication of application: **27.09.2023**
(21) Application number: 23163344.7
(22) Date of filing: 22.03.2023
(51) Int. Cl.: B32B 1/08, B32B 3/28, B32B 7/12, B32B 27/08, B32B 27/34

(54) **MULTILAYER TUBE FOR AUTOMOTIVE APPLICATIONS**

(30) Priority: 23.03.2022 CN 202210291804; 06.04.2022 US 202217714922
(71) Applicant: Cooper-Standard Automotive, Inc., Northville, MI 48168 (US)
(72) Inventor: ENDO, Takahiro, Michigan (US); NIE, Tao, Michigan (US); ZHANG, Yingping, Michigan (US); HE, Vincent, Michigan (US)
(74) Representative: Kilburn & Strode LLP

(57) **Abstract**

A multilayer tube is provided for use in with transmission oil or heating and cooling fluid applications in motor vehicles. The multilayer tube has an outer layer comprising an aliphatic or an aromatic polyamide to provide protection from the outside environment; a middle layer of a lower cost material that comprises from 20-90% of the thickness of the tube materials; and an inner layer that has excellent resistance to transmission oil or glycol coolant and temperature.

## Description

### CROSS-REFERENCE TO RELATED APPLICATIONS

This application claims priority from Chinese Application No. 202210291084.6, filed March 23, 2022, which is incorporated herein in its entirety.

### BACKGROUND

The present invention relates to a multilayer tube for transferring or conveying a liquid such as transmission oil or liquids for heating and cooling applications for vehicles and machines equipped with a motor or engine.

There are multilayer tubes that are known to be used in vehicles such as a multilayered tube discussed in US Patent Application Pub. US2021/0252822 which covers a five-layer tube made from polyamides that is used to transfer fluids such as fuels in vehicles. Multilayer tubes are able to provide a combination of properties that may be unavailable in a single material.

Typically, a multilayer tube is comprising an outer layer, an intermediate layer radially within the barrier layer, and an inner layer radially within the intermediate layer. Additional layers may be positioned between the outer layer and the intermediate layer or between the intermediate layer and the inner layer. It is important that the material in the tube has good chemical resistance to the fluid and that it withstands the temperatures experienced and that the chemical components in the fluid do not permeate through the tube to the environment. This is important both for avoiding a reduction in the quality of the fluid and to avoid the escape of volatile substances into the environment. In addition, it is important to avoid slow leaching or absorption of the fluid into the tube material.

One other concern is that the multilayer tube be cost competitive with alternative tubing used for the same function while maintaining the needed properties. It has been found that the use of a middle layer that maintains the needed physical properties but has a lower cost is an efficient way to meet the requirements for such tubes or lines in vehicles.

The present disclosure also relates to a method of manufacturing a multi-layer tube, particularly a multilayer tube as mentioned above.

Multilayer tubes are made for a number of purposes. One such purpose is sending transmission oil in transmission cooling systems where the temperatures may range from -40°C to 150°C. Another purpose is conveying heating and cooling fluids in vehicle heating and cooling systems where the temperatures may range from -40C to 130C in continuous operation and up to 135C at peak temperatures.

Multilayer tubes include multiple layers which address certain needs in such tubes.

For example, an outer protection layer is typically provided in order to protect the inner layers against harsh environments, as for example within an engine compartment of a motor vehicle. In these environments, both mechanical and heat stress can occur, but also the exposure to fluids like water, oil, etc. that should not intermix with the fluid that is guided within the multilayer tube.

On the other hand, the inner layer comes into contact with the fluid to be conveyed. The inner layer therefore needs to be compatible with or resistant to the fluid to be guided. The intermediate layer, typically, provides a certain rigidity and stability of the tube. Finally, the outer layer has the task to provide a barrier between the outside environment of the tube.

In view of the above, it is the object of the disclosure to provide an improved cost-efficient multilayer tube that meets the requirements for transferring of transmission oil or glycol coolant and the method of manufacturing such multilayer tube.

### SUMMARY

This disclosure provides a multilayer tube comprising an outer layer of an aliphatic or an aromatic polyamide; a middle layer of aliphatic polyamides; and an inner layer of aliphatic polyamides or an aromatic polyamide. The inner layer comprises an aliphatic or aromatic polyamide such as PA610, PA612, PA1010, PA1012, PA9T, PPA or Nylon MXD6. The PPA in the inner layer may be a polymer selected from PA6T, PA6T/6I, PA6T/6, PA6T/66, PA9T and PA11T. The outer layer may comprise an aliphatic or an aromatic polyamide such as PA610, PA612, PA1010, PA1012 or PA9T similar to the inner layer. The middle layer is an aliphatic polyamide such as PA6, PA66, PA610, PA612, PA12 or PA11. The middle layer may be further comprising about 1-49 wt% elastomer. The multilayer tube may be used in a transmission cooling system at temperatures from -40C to 150C. The multilayer tube may have a smooth bore or a corrugated surface. The outer layer may be a polymer selected from PA610, PA612, PA1010, PA1012, PA9T, PPA or Nylon MXD6. The PPA may be a polymer selected from PA6T, PA6T/6I, PA6T/6, PA6T/66, PA9T and PA11T. The middle layer may be a polymer selected from PA6, PA66, PA610, PA612, PA12 or PA11. This middle layer is selected to lower the overall cost of the tube as compared to a tube made from a single polymer layer. The inner layer may be the same or different from the outer layer and be a polymer selected from PA610, PA612, PA1010, PA1012, PA9T, PPA or Nylon MXD6.

The multilayer tube may also be used in an automotive heating and cooling system at -40C to 130C in continuous operation and up to 135C at peak temperatures, 150°C. The multilayer tube may have a smooth bore or a corrugated surface. The outer layer may be a polymer selected from PA9T or PPA. The middle layer may be a polymer selected from PA6, PA610, PA612, PA12 or PA11. This middle layer is selected to lower the overall cost of the tube as compared to a tube made from a single polymer layer. The inner layer may be the same or different from the outer layer and be a polymer selected from, PA610, PA612, PA1010, PA1012, PA9T, PPA or Nylon MXD6.

### BRIEF DESCRIPTION OF THE SEVERAL VIEWS OF THE DRAWING

Exemplary embodiments of the disclosure are explained in more detail in the following description and are represented in the drawings, in which:
FIG. 1 shows a schematic cross section of a multilayer tube with three layers.
FIG. 2 shows a schematic cross section of a multilayer tube with five layers having a layer of adhesive between the outer and middle layer, and having a layer of adhesive between the middle and inner layer
FIG. 3 shows a schematic cross section of a multilayer tube with four layers having a layer of adhesive between the outer and middle layer.
FIG. 4 shows a schematic cross section of a multilayer tube with four layers having a layer of adhesive between the middle and inner layer.

### Detailed Description

The disclosure provides a multilayer tube for conveying transmission oil or for conveying vehicle heating or cooling fluids, comprising an outer layer, an intermediate layer radially within the outer layer comprising an aliphatic polyamide, and an inner layer radially within the intermediate layer, wherein the layers are co-extruded layers.

Further, the multilayer tube is made by a method of manufacturing a multi-layer tube comprising the steps of providing an extrudable outer protection layer material for an outer protection layer, providing an extrudable intermediate layer material for an intermediate layer, providing an extrudable inner layer material for an inner layer, wherein the inner layer material comprises an aliphatic or an aromatic polyamide, and co-extruding at least two of the layers.

The middle layer is selected as a lower cost material in order to provide a significant cost saving in products yet retain the desired overall properties and performance.

The multilayer tube for transmission oil applications contains an aromatic or aliphatic polyamide used for the outer layer that can be any material selected from the group of PA610, PA612, PA1010, PA1012 PA9T, PPA or Nylon MXD6. The middle layer often contains an elastomer such as from about 1% to 49% elastomer by weight. The inner layer is selected to be a similar material as the outer layer such as PA610, PA612, PA1010, PA1012 PA9T, PPA or Nylon MXD6.

PA610 is a polyamide made from one monomer with six carbon atoms and the other monomer having ten carbon atoms which is made from hexamethylenediamine and sebacic acid. Similarly, PA612 is a copolymer of a linear 6C diamine and a 12C diacid. PA1010 is the polycondensation product of 1,10-decamethylene diamine and 1,10-decanedioic acid (sebacic). PA1012 is a biobased polyamide.

In another preferred embodiment, the intermediate layer comprises at least one of PA6, PA66, PA610, PA612, PA12 or PA11.

Due to the general ability to adhere between the outer protection layer and the barrier layer, an adhesive layer may be necessary between outer and middle layers or between inner and middle layers.

The aromatic or partially aromatic polyamide used for the outer layer of the multilayer tube for heating and cooling fluids can be any material selected from the group of PA610, PA612, PA1010, PA1012 PA9T, PPA or Nylon MXD6. The intermediate or middle layer is an aliphatic polyamide. The middle layer often contains an elastomer such as from about 1% to 49% elastomer by weight. The middle layer may be selected from PA6, PA612 or PA610, PA12 or PA11. The inner layer is selected to be a similar material as the outer layer such as PA610, PA612, PA1010, PA1012 PA9T, PPA or Nylon MXD6

The middle layer is selected to provide sufficient of the desired properties but especially at lower cost compared to the inner and outer layer materials that are more critical in being the surface that the fluid is conveyed through in the case of the inner layer or the layer that is exposed to the environment in the case of the outer layer. In addition, depending upon the materials selected for the layers, there may be a layer of adhesive between the outer layer and the middle layer and/or the middle layer and the inner layer.

It will be understood that the features of the disclosure mentioned above and those yet to be explained below can be used not only in the respective combination indicated, but also in other combinations or in isolation, without leaving the scope of the present invention.

### EMBODIMENTS

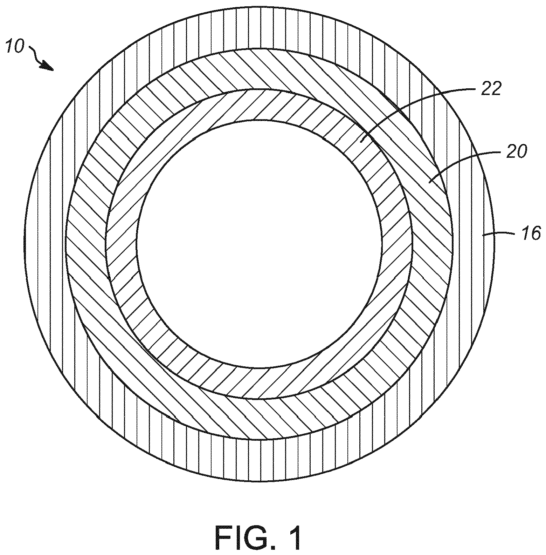

A multilayer tube according to the disclosure is generally shown in FIG. 1 and given the reference numeral 10.

The multilayer tube 10 is provided in Fig. 1. There are three layers shown, an outer layer 16, a middle or intermediate layer 20 and an inner layer 22. The most effective manufacturing method for layers 16, 20 and 22 is coextrusion. The middle layer may be 20-90% of the thickness of the tube in some embodiments, 30-80% of the thickness in other embodiments.

Each of the above materials can be provided in grades that are adapted to the respective function.

The outer layer may comprise of materials such as PA610, PA612, PA1010 or PA1012, PA9T. The intermediate layer 20 may comprise at least one of PA6, PA66, PA610, PA612, PA12 or PA11. The inner layer 22 may comprise at least one of PA610, PA612, PA1010, PA1012, PA9T, PPA or Nylon MXD6. The intermediate layer is a material that costs less than the outer layer or the inner layer and is a material that adheres to those layers so that an adhesive is not necessary in the embodiment shown in Fig. 1.

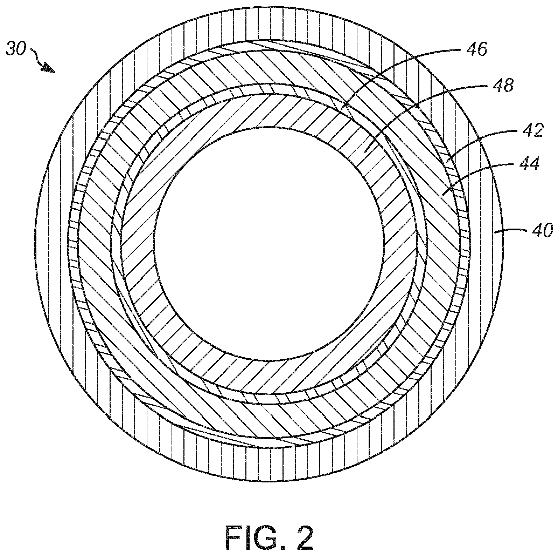

A second embodiment is shown in Fig. 2 in which layers of adhesive are shown between the outer layer and intermediate layer as well as between the inner layer and the intermediate layer. The adhesive may be a polyamide or other known adhesive to adhere to the polyamides in the three main layers. In Fig. 2 is shown a tube 30 in cross section with an outer layer 40, then a layer of adhesive 42, an intermediate layer 44, an adhesive layer 46 and an inner layer 48. The middle layer may be 20-90% of the thickness of the tube in some embodiments, 30-80% of the thickness in other embodiments. Each of the above materials can be provided in grades that are adapted to the respective function. The outer layer 40 may comprise materials such as PA610, PA612, PA1010, PA1012, PA9T, PPA or Nylon MXD6. The intermediate layer 44 may comprise at least one of PA6, PA66, PA610, PA612, PA12 or PA1 1. The inner layer 48 may comprise at least one of PA610, PA612, PA1010, PA1012, PA9T, PPA or Nylon MXD6.

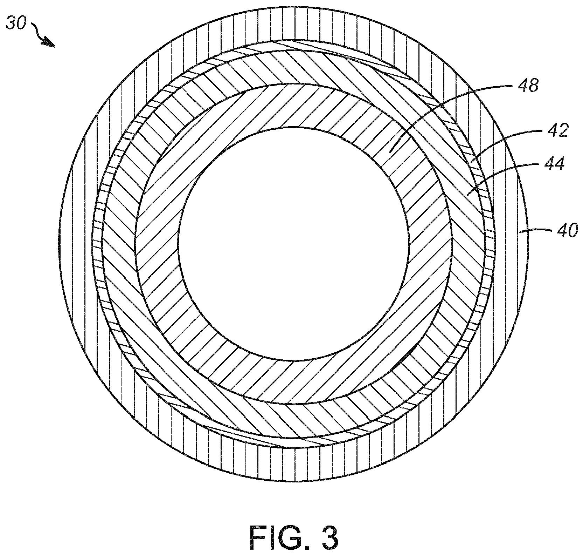

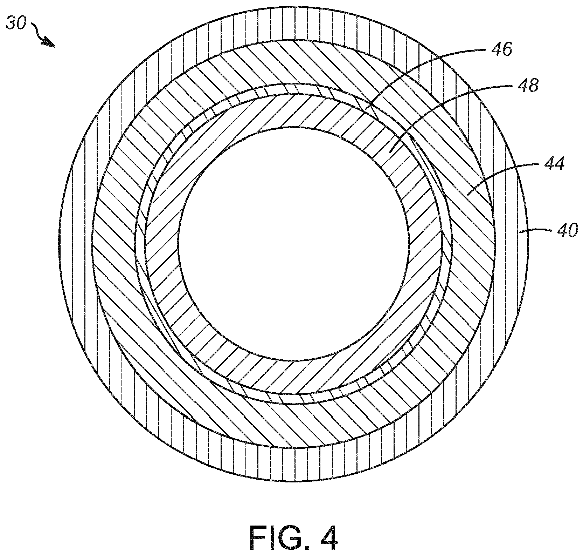

A third embodiment is shown in Fig. 3 which is identical to Fig. 2 except for the absence of adhesive layer 46. Fig. 4 shows a fourth embodiment that is identical to Fig. 2 except for the absence of adhesive layer 42.

### NUMBERED EMBODIMENTS

### Numbered embodiment 1

A multilayer tube comprising
an outer layer comprising an aliphatic or an aromatic polyamide;
a middle layer of aliphatic polyamide comprising from 20-90% of a combined thickness of three layers within said multilayer tube; and
an inner layer comprising an aliphatic or aromatic polyamide.

### Numbered embodiment 2

The multilayer tube of numbered embodiment 1 wherein said middle layer comprises about 20-90% of said combined thickness.

### Numbered embodiment 3

The multilayer tube of numbered embodiment 1 wherein said middle layer comprises about 30-80% of said combined thickness.

### Numbered embodiment 4

The multilayer tube of numbered embodiment 1 wherein said middle layer is further comprising about 1-49 wt% elastomer.

### Numbered embodiment 5

The multilayer tube of numbered embodiment 1 in a transmission cooling system at temperatures from about -40C to 150C.

### Numbered embodiment 6

The multilayer tube of numbered embodiment 1 in an automotive heating and cooling system from about -40C to 130C.

### Numbered embodiment 7

The multilayer tube of numbered embodiment 1 having a smooth bore or a corrugated surface.

### Numbered embodiment 8

The multilayer tube of numbered embodiment 1 wherein the outer layer is a polyamide polymer selected from PA610, PA612, PA1010, PA1012, PA9T, PPA and Nylon MXD6.

### Numbered embodiment 9

The multilayer tube of numbered embodiment 1 wherein the outer layer is a polyamide polymer selected from PA610, PA612, PA1010, and PA1012.

### Numbered embodiment 10

The multilayer tube of numbered embodiment 1 wherein the middle layer is a polyamide polymer selected from PA6 and PA66.

### Numbered embodiment 11

The multilayer tube of numbered embodiment 1 wherein the middle layer is a polyamide polymer selected from PA6, PA610 and PA612.

### Numbered embodiment 12

The multilayer tube of numbered embodiment 1 wherein the inner layer is a polyamide polymer selected from PA610, PA612, PA1010, PA1012, PA9T, PPA and Nylon MXD6.

### Numbered embodiment 13

The multilayer tube of numbered embodiment 1 wherein said inner layer is PA610 and said middle layer comprises PA6.

### Numbered embodiment 14

The multilayer tube of numbered embodiment 1 wherein a layer of adhesive is located between said inner layer and said middle layer.

### Numbered embodiment 15

The multilayer tube of numbered embodiment 1 wherein a layer of adhesive is located between said middle layer and said outer layer.

## Claims

1. A multilayer tube comprising
an outer layer comprising an aliphatic or an aromatic polyamide;
a middle layer of aliphatic polyamide comprising from 20-90% of a combined thickness of three layers within said multilayer tube; and
an inner layer comprising an aliphatic or aromatic polyamide.

2. The multilayer tube of claim 1, wherein said middle layer comprises about 20-90% of said combined thickness.

3. The multilayer tube of claim 1, wherein said middle layer comprises about 30-80% of said combined thickness.

4. The multilayer tube of any preceding claim, wherein said middle layer is further comprising about 1-49 wt% elastomer.

5. The multilayer tube of any preceding claim, in a transmission cooling system at temperatures from about -40C to 150C.

6. The multilayer tube of any preceding claim, in an automotive heating and cooling system from about -40C to 130C.

7. The multilayer tube of any preceding claim, having a smooth bore or a corrugated surface.

8. The multilayer tube of any preceding claim, wherein the outer layer is a polyamide polymer selected from PA610, PA612, PA1010, PA1012, PA9T, PPA and Nylon MXD6.

9. The multilayer tube of any of claims 1 to 7, wherein the outer layer is a polyamide polymer selected from PA610, PA612, PA1010, and PA1012.

10. The multilayer tube of any preceding claim, wherein the middle layer is a polyamide polymer selected from PA6 and PA66.

11. The multilayer tube of any of claims 1 to 9, wherein the middle layer is a polyamide polymer selected from PA6, PA610 and PA612.

12. The multilayer tube of any preceding claim, wherein the inner layer is a polyamide polymer selected from PA610, PA612, PA1010, PA1012, PA9T, PPA and Nylon MXD6.

13. The multilayer tube of any preceding claim, wherein said inner layer is PA610 and said middle layer comprises PA6.

14. The multilayer tube of any preceding claim, wherein a layer of adhesive is located between said inner layer and said middle layer.

15. The multilayer tube of any preceding claim, wherein a layer of adhesive is located between said middle layer and said outer layer.
